# EUROPEAN PATENT APPLICATION

(11) **EP 4 804 287 A1**
(43) Date of publication of application: **09.09.2026**
(21) Application number: 26159228.1
(22) Date of filing: 18.02.2026
(51) Int. Cl.: H01M 10/42, H01M 4/36, H01M 4/525, H01M 4/58

(54) **POSITIVE ELECTRODE SLURRY, POSITIVE ELECTRODE FOR RECHARGEABLE LITHIUM BATTERY, AND METHOD FOR MANUFACTURING THE SAME**

(30) Priority: 05.03.2025 KR 20250028035
(71) Applicant: SAMSUNG SDI CO., LTD., Yongin-si, Gyeonggi-do 17084 (KR)
(72) Inventor: Kang, Sanghyun, 17084 Yongin-si, Gyeonggi-do (KR); Lee, Minju, 17084 Yongin-si, Gyeonggi-do (KR); Park, Sejeong, 17084 Yongin-si, Gyeonggi-do (KR); Lee, Junsik, 17084 Yongin-si, Gyeonggi-do (KR)
(74) Representative: Meissner Bolte Partnerschaft mbB

(57) **Abstract**

The present disclosure relates to a positive electrode slurry, a positive electrode for rechargeable lithium battery, and a method for manufacturing a positive electrode for a rechargeable lithium battery. A positive electrode slurry includes a positive electrode active material, a conductive material, a binder, and an additive for preventing gelation. The positive electrode active material includes a nickel-based first positive electrode active material having a layered structure, and a phosphate-based second positive electrode active material. A weight ratio of the first positive electrode active material to the positive electrode active material is in a range of about 50 wt % to about 95 wt %. The additive for preventing gelation includes at least one of oxalic acid, succinic acid, malic acid, fumaric acid, or a combination thereof.

## Description

### BACKGROUND

The present invention relates to a positive electrode slurry, a positive electrode for rechargeable lithium battery, and a method for manufacturing a positive electrode for a rechargeable lithium battery.

With increasing presence of battery-powered electronic devices such as, e.g., mobile phones, notebook computers, electric vehicles, and the like, the demand for rechargeable batteries with high energy density and large capacity has been increasing. Accordingly, enhancing the performance of rechargeable lithium batteries may be advantageous.

A rechargeable lithium battery generally includes a positive electrode, a negative electrode, and an electrolyte. Both the positive and negative electrodes contain active materials capable of lithium-ion intercalation and deintercalation. Electrical energy is generated through oxidation and reduction reactions as lithium ions move between the electrodes during charging and discharging.

In the field of positive electrodes, key research and development efforts for improving battery performance have focused on the development of positive electrode active materials with high energy density, the development of materials with desired or improved stability, and the prevention of gelation in positive electrode slurries. In order to significantly enhance the battery performance, it may be advantageous to develop a positive electrode satisfying all three characteristics. However, due to technical limitations, current developments have typically been limited to improvements in only one or two of these aspects.

In the field of positive electrodes, research and development are underway to improve battery performance and reduce costs. In particular, studies involving the fabrication of electrodes by mixing two or more types of positive electrode active materials are being conducted. When two or more kinds of positive electrode active materials are mixed, processing conditions different from conventional methods may be required.

### SUMMARY

One issue to be addressed by the present invention is to provide a positive electrode in which two or more kinds of positive electrode active materials are mixed, which exhibits high energy density and desired or improved stability while reducing or preventing gelation in a slurry state.

Another issue to be addressed by the present invention is to provide a method for manufacturing the positive electrode.

A positive electrode slurry according to the present invention includes a positive electrode active material, a conductive material, a binder, and an additive for reducing or preventing gelation. The positive electrode active material includes a nickel-based first positive electrode active material having a layered structure and a phosphate-based second positive electrode active material. A weight ratio (weight proportion) of the first positive electrode active material to (in) the positive electrode active material is in a range of about 50 wt % to about 95 wt %. The additive for preventing gelation includes at least one of oxalic acid, succinic acid, malic acid, fumaric acid, or a combination thereof.

The present invention is also directed to a positive electrode for a rechargeable lithium battery, the positive electrode comprising:
a positive electrode current collector; and
a positive electrode active material layer on the positive electrode current collector,
wherein the positive electrode active material layer comprises a positive electrode active material, a conductive material, a binder, and an additive for preventing gelation,
wherein the positive electrode active material comprises a nickel-based first positive electrode active material having a layered structure and a phosphate-based second positive electrode active material,
wherein a weight ratio (weight proportion) of the first positive electrode active material to (in) the positive electrode active material is in a range of about 50 wt % to about 95 wt %, and wherein the additive for preventing gelation comprises at least one of oxalic acid, succinic acid, malic acid, fumaric acid, and a combination thereof.

The present invention is further directed to a method for manufacturing a positive electrode for a rechargeable lithium battery, the method comprising:
preparing a positive electrode slurry including a positive electrode active material, a conductive material, a binder, and an additive for preventing gelation; and
coating the positive electrode slurry on a positive electrode current collector,
wherein the positive electrode active material comprises a nickel-based first positive electrode active material having a layered structure and a phosphate-based second positive electrode active material,
wherein a weight ratio (weight proportion) of the first positive electrode active material to (in) the positive electrode active material is in a range of about 50 wt % to about 95 wt %, and
wherein the additive for preventing gelation comprises at least one of oxalic acid, succinic acid, malic acid, fumaric acid, and a combination thereof.

The present invention is also directed to a positive electrode for a rechargeable lithium battery obtainable by a method of the invention.

The present invention is also directed to a rechargeable lithium battery containing a positive electrode of the invention.

### BRIEF DESCRIPTION OF DRAWINGS

FIG. 1 illustrates a simplified conceptual diagram showing a rechargeable lithium battery according to one or more example embodiments of the present disclosure.
FIGS. 2-5 illustrates schematic diagrams each showing a rechargeable lithium battery according to one or more example embodiments, FIG. 2 illustrates a cylindrical battery, FIG. 3 illustrates a prismatic battery, and FIGS. 4 and 5 illustrate pouch-type (kind) batteries.
FIG. 6 illustrates a schematic diagram of a cross section of a positive electrode active material layer according to an example embodiment of the present disclosure.
FIG. 7 illustrates a flowchart of a method for manufacturing a positive electrode for a rechargeable lithium battery according to an example embodiment of the present disclosure.
FIG. 8 illustrates a photograph of a positive electrode slurry according to a comparative example of the present disclosure.

### DETAILED DESCRIPTION

To fully understand the configuration and effects of the present disclosure, some example embodiments are described with reference to the accompanying drawings. However, the present disclosure is not limited to the following example embodiments, and may be implemented in various forms. The example embodiments are provided solely to illustrate the present disclosure and to enable those skilled in the art to fully understand its scope.

In this description, when an element is described as being "on" another element, the element may be directly on the other element, or one or more intervening elements may be present. In the drawings, certain thicknesses may be exaggerated to better illustrate technical details. Throughout the specification, like reference numerals indicate like elements.

The example embodiments described herein may be illustrated using sectional and/or plan views, which are presented as idealized examples of the present disclosure. The thicknesses of layers and regions in the drawings may be exaggerated for clarity. The regions shown in the drawings are for illustrative purposes and should not be construed as limiting the scope of the present disclosure. Although terms such as "first," "second," and "third" may be used to describe various elements, these terms are merely for distinction and do not imply any particular order or hierarchy. The example embodiments described and illustrated herein include complementary variations.

The singular forms "a," "an," and "the" may also include the plural forms as well, unless specifically stated otherwise.

The terms used in this description serve only to explain various example embodiments and are not intended to limit the present disclosure. Unless explicitly stated otherwise, singular forms may also include plural forms. The terms "comprises/includes" and "comprising/including" do not exclude the presence or addition of one or more other components.

The phrases "A or B," "at least one of A and B," "at least one of A or B," "A, B, or C," "at least one of A, B, and C," and "at least one of A, B, or C" include any one or all possible combinations of the listed elements.

As used herein, "combinations thereof" can mean mixtures, laminates, composites, copolymers, alloys, blends, reaction products, and the like of the components.

Unless otherwise specifically defined, the term "particle diameter" refers to an average particle diameter. The particle diameter may represent the median particle size (D50), which corresponds to the diameter of particles at 50 vol% in a cumulative particle size distribution. The average particle diameter (D50) can be measured using widely known methods, such as a particle size analyzer, transmission electron microscope (TEM) imaging, or scanning electron microscope (SEM) imaging. Alternatively, dynamic light scattering may be used, where particle counts within size ranges are analyzed to calculate the average particle diameter (D50). Additionally, a laser scattering method may be employed, in which a target particle is dispersed in a solvent, introduced into a laser scattering particle measurement device (e.g., MT3000 from Microtrac, Inc.), irradiated with ultrasonic waves at 28 kHz and 60 W, and subsequently analyzed to determine the D50 value based on a 50% cumulative particle size distribution.

Herein, the term "single particle" refers to a particle that exists independently without grain boundaries within the particle, and is composed of or include a single structure. Morphologically, it may refer to a particle that exists in non-agglomerated phase, such as an individual particle, a monolith structure, a monolithic body, or a non-agglomerated particle. In one example, the single particle may refer to a single crystal. In another example, the single particle may refer to a particle containing a number of crystals. The single particle may exist in an isolated form, or in some cases, less than 10 single particles may be attached together.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

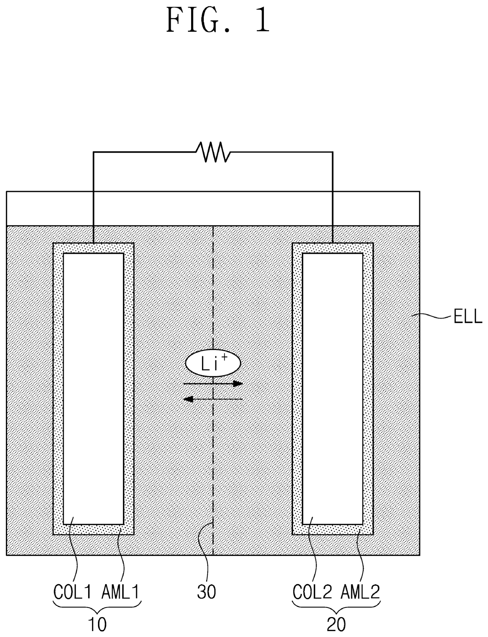

FIG. 1 is a cross-sectional view of a rechargeable lithium battery according to example embodiments of the present disclosure. Referring to FIG. 1, the rechargeable lithium battery may include a positive electrode 10, a negative electrode 20, a separator 30, and an electrolyte solution ELL.

The positive electrode 10 and the negative electrode 20 may be spaced apart from each other by the separator 30. The separator 30 may be disposed between the positive electrode 10 and the negative electrode 20. The positive electrode 10, the negative electrode 20 and the separator 30 may be in contact with the electrolyte solution ELL. The positive electrode 10, the negative electrode 20 and the separator 30 may be impregnated in the electrolyte solution ELL.

The electrolyte solution ELL may be or include a medium for transferring lithium ions between the positive electrode 10 and the negative electrode 20. In the electrolyte solution ELL, the lithium ions may move through the separator 30 toward the positive electrode 10 or the negative electrode 20.

### Positive Electrode 10

The positive electrode 10 for a rechargeable lithium battery may include a current collector COL1 and a positive electrode active material layer AML1 on the current collector.

The positive electrode active material layer AML1 may include a positive electrode active material, and may further include a binder and/or a conductive material (e.g., an electrically conductive material).

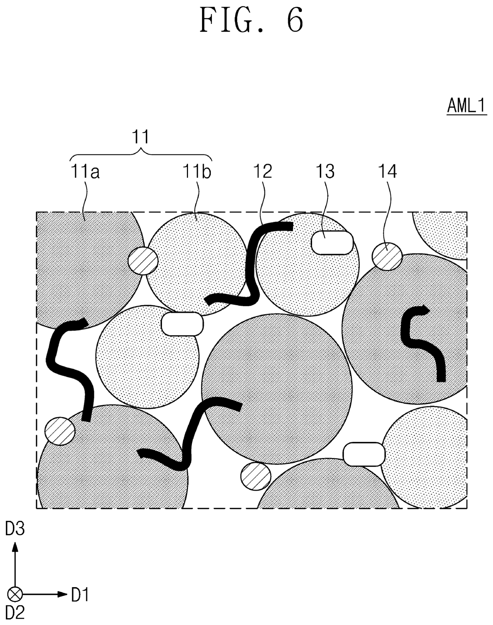

The positive electrode active material layer AML1 according to one or more example embodiments of the present disclosure is described in more detail with reference to FIG. 6. Aluminum (Al) may be included in the current collector COL1, but example embodiments of the present disclosure are not limited thereto.

### Negative Electrode 20

The negative electrode 20 for a rechargeable lithium battery may include a current collector COL2 and a negative electrode active material layer AML2 on the current collector COL2. The negative electrode active material layer AML2 may include a negative electrode active material, and may further include a binder and/or a conductive material (e.g., an electrically conductive material).

For example, the negative electrode active material layer AML2 may include about 90 wt% to about 99 wt% of the negative electrode active material, about 0.5 wt% to about 5 wt% of the binder, and about 0 wt% to about 5 wt% of the conductive material.

The binder may attach the negative electrode active material particles to each other, and the negative electrode active material to the current collector COL2. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material may impart conductivity (e.g., electrical conductivity) to the electrode. Any material that does not cause chemical change (e.g., that does not cause an undesirable chemical change in the rechargeable lithium battery), and that conducts electrons, can be used in the battery. Non-limiting examples thereof may include a carbon-based material such as at least one of natural graphite, artificial graphite, carbon black, acetylene black, ketjen black, a carbon fiber, a carbon nanofiber, and a carbon nanotube; a metal-based material including at least one of copper, nickel, aluminum, silver, and the like, in a form of a metal powder or a metal fiber; a conductive polymer such as a polyphenylene derivative; or a mixture thereof.

The negative current collector COL2 may include at least one of a copper foil, a nickel foil, a stainless steel foil, a titanium foil, a nickel foam, a copper foam, a polymer substrate coated with a conductive metal, or a combination thereof.

### Negative Electrode Active Material

The negative electrode active material may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. The crystalline carbon may be graphite such as non-shaped, sheet-shaped, flake-shaped, sphere-shaped, or fiber-shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOx (0 < x ≤ 2), a Si-Q alloy (where Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, SnO₂, a Sn-based alloy, or a combination thereof.

The silicon-carbon composite may be or include a composite of silicon and amorphous carbon. According to an example embodiment, the silicon-carbon composite may be in the form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be used in combination with a carbon-based negative electrode active material.

### Separator 30

Depending on the type of the rechargeable lithium battery, the separator 30 may be present between the positive electrode 10 and the negative electrode 20. The separator 30 may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator 30 may include a porous substrate and a coating layer including an organic material, an inorganic material, or a combination thereof on one surface, or on both surfaces of the porous substrate.

The porous substrate may be a polymer film formed of or including any one polymer such as or including at least one of polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked together.

### Electrolyte Solution ELL

The electrolyte solution ELL for a rechargeable lithium battery may include a non-aqueous organic solvent and a lithium salt.

The non-aqueous organic solvent may constitute a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvents may be used alone, or in combination of two or more solvents.

In addition, when using a carbonate-based solvent, a cyclic carbonate and a chain carbonate may be mixed, and the cyclic carbonate and the chain carbonate may be mixed in a volume ratio in a range of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluoro(oxalato)borate(LiDFOB), lithium difluorobis(oxalato)phosphate (LiDFBOP), and lithium bis(oxalato) borate (LiBOB).

### Rechargeable Lithium Battery

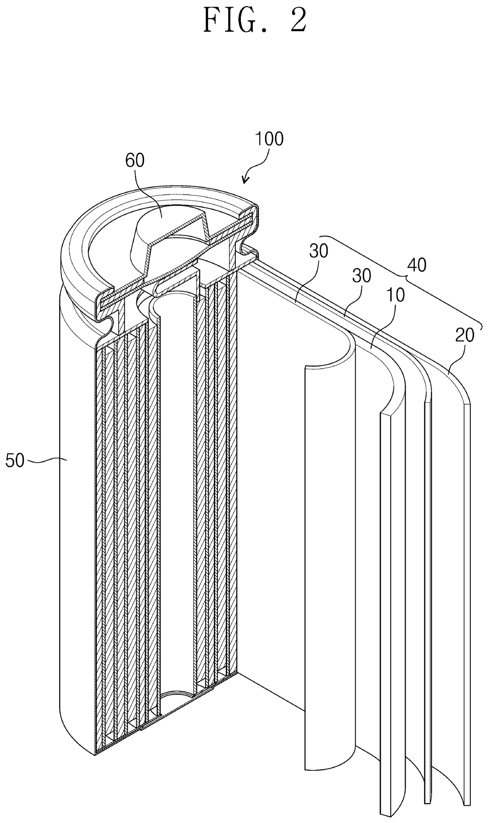

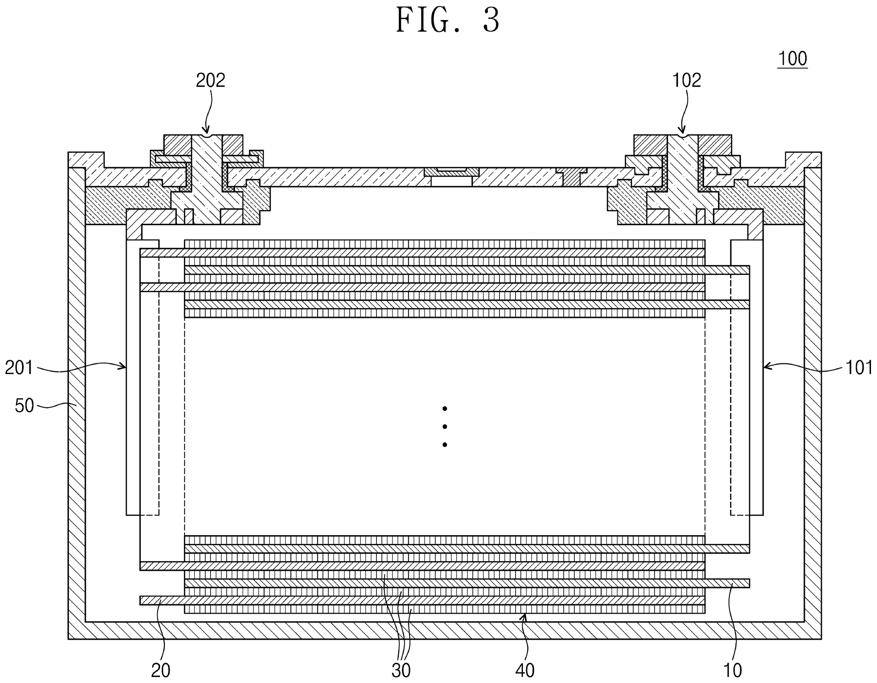

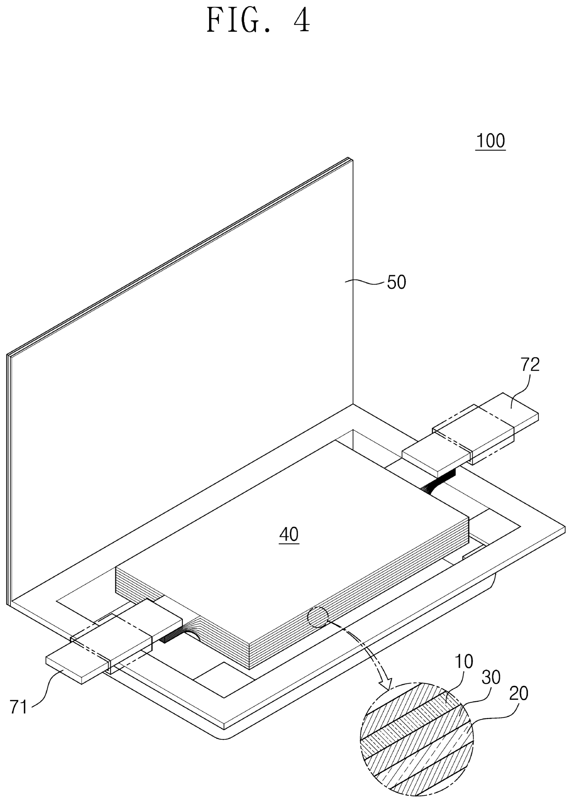

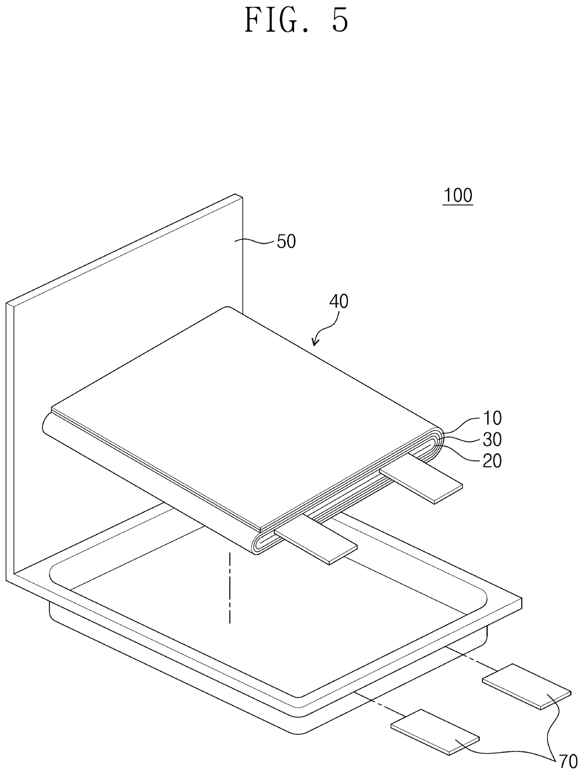

The rechargeable lithium battery may be classified into cylindrical, prismatic, pouch, or coin-type batteries, and the like depending on their shape. FIGS. 2 to 5 are schematic views illustrating a rechargeable lithium battery according to an example embodiment. FIG. 2 illustrates a cylindrical battery, FIG. 3 illustrates a prismatic battery, and FIGS. 4 and 5 illustrate pouch-type batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 2. In FIG. 3, the rechargeable lithium battery 100 may include a positive lead tab 101, a positive terminal 102 connected to the positive lead tab 101, a negative lead tab 201, and a negative terminal 202 connected to the negative lead tab 201. As shown in FIGS. 4 and 5, the rechargeable lithium battery 100 may include an electrode tab 70 illustrated in FIG. 5, or, for example, a positive electrode tab 71 and a negative electrode tab 72 illustrated in FIG. 4, the electrode tabs 70/71/72 forming an electrical path for inducing the current formed in the electrode assembly 40 to the outside of the battery 100.

The rechargeable lithium battery according to an example embodiment may be applicable to, e.g., automobiles, mobile phones, and/or various types of electric devices, as non-limiting examples.

FIG. 6 is an enlarged view of a cross section of a positive electrode active material layer, according to an example embodiment of the present disclosure. The positive electrode and the positive electrode slurry according to the present disclosure are described in more detail with reference to FIG. 6.

The positive electrode slurry according to an example embodiment of the present disclosure may include a positive electrode active material 11, a conductive material 12, a binder 13, and an additive for preventing gelation 14.

The positive electrode active material 11 may include a nickel-based first positive electrode active material 11a, and a phosphate-based second positive electrode active material 11b.

The first positive electrode active material 11a may be or include a lithium-transition metal composite oxide containing nickel. The first positive electrode active material 11a may have a layered crystal structure. Due to the nickel amount thereof and the layered crystal structure, the first positive electrode active material 11a may have a high energy density and desired or improved output characteristics.

In an example embodiment, in the first positive electrode active material 11a, the amount of nickel may be in a range of about 60% or more. The amount of nickel may be defined as a molar ratio of nickel to about 100 mol % of metals excluding lithium in the first positive electrode active material 11a. For example, when the first positive electrode active material 11a is Li (Ni_{0.6}Co_{0.2}Al_{0.2})O₂, the amount of nickel may be about 60%.

In an example embodiment, the amount of nickel may be in a range of about 80% or more. An increase in the amount of nickel may lead to an increase in the energy density of the first positive electrode active material 11a. For a device requiring high energy such as, e.g., an automobile, the amount of nickel may be, for example, in a range of about 80% or more.

The first positive electrode active material 11a according to examples of the present disclosure may include at least any one of aluminum, manganese, or a combination thereof. For example, the first positive electrode active material 11a may be or include NCM containing nickel, cobalt, and manganese, or NCA containing nickel, cobalt, and aluminum.

In an example embodiment, the first positive electrode active material 11a may optionally include a dopant. The dopant may enhance the performance of the first positive electrode active material 11a and may include, for example, at least one of zirconium (Zr), aluminum (Al), vanadium (V), chromium (Cr), iron (Fe), rhenium (Re), boron (B), ruthenium (Ru), titanium (Ti), niobium (Nb), molybdenum (Mo), magnesium (Mg), platinum (Pt), or a combination thereof.

The dopant may be distributed in various ways. For example, the dopant may be coated on the surface of a particle of the first positive electrode active material 11a, or incorporated into the lattice structure of a particle of first positive electrode active materials 11a.

In an example embodiment, the first positive electrode active material 11a may be represented by the following chemical formula 1.

chemical formula 1: Liₐ₁(Niₚ₁Co_{c1}X1_{d1}Y1ₑ₁)O₂.

In the chemical formula 1, 0.8≤a1≤1.2, 0.6≤b1<1.0, 0<c1≤0.2, 0≤d1≤0.2, 0≤e1<0.1, and b1+c1+d1+e1=1.

X1 may include at least one of aluminum (Al), manganese (Mn), or a combination thereof.

Y1 may include at least one of zirconium (Zr), aluminum (Al), vanadium (V), chromium (Cr), iron (Fe), rhenium (Re), boron (B), ruthenium (Ru), titanium (Ti), niobium (Nb), molybdenum (Mo), magnesium (Mg), platinum (Pt), or a combination thereof.

In an example embodiment, X1 in the chemical formula 1 may include aluminum (Al).

In another example embodiment, b1 in the chemical formula 1 may be equal to or greater than about 0.8 and less than about 1.0.

The first positive electrode active material 11a according to the present disclosure may include a plurality of particles. The shape of each of the plurality of particles may vary. For example, the shape of each of the particles may be spherical, oval, cubic, or the like.

In an example embodiment, the average particle diameter (D50₁₁ₐ) of the first positive electrode active material 11a may be in a range of about 100 nm to about 20 µm, about 500 nm to about 15 µm, about 1 µm to about 10 µm, or about 5 µm to about 10µm. The average particle diameter (D50₁₁₂) may refer to a value corresponding to the point at which the cumulative volume reaches about 50% in a particle size distribution curve obtained using a particle size analyzer.

The second positive electrode active material 11b according to examples of the present disclosure may be or include a compound including lithium, a transition metal, and a phosphate.

In an example embodiment, the second positive electrode active material 11b may have an olivine crystal structure. Due to the olivine-type crystal structure, the second positive electrode active material 11b may have desired or improved structural stability.

The olivine crystal structure including a phosphate may exhibit similar structures before and after the intercalation and deintercalation of lithium ions. Therefore, structural stability may be maintained even during the charging and discharging processes, even as lithium ions are intercalated into or deintercalated from the crystal structure.

Although the first positive electrode active material 11a according to the present disclosure has a high energy density and desired or improved output characteristics as described above, the first positive electrode active material 11a has a drawback in terms of stability. Accordingly, the drawback of the first positive electrode active material 11a may be addressed by mixing the first positive electrode active material 11a with the second positive electrode active material 11b, which has high stability. As a result, a positive electrode active material exhibiting desired or improved energy density, output characteristics, and stability, may be provided.

In an example embodiment, the second positive electrode active material 11b may be or include a Lithium Iron Phosphate (LFP) containing iron, or an Lithium Manganese Iron Phosphate (LMFP) containing manganese and iron.

In an example embodiment, the second positive electrode active material 11b may optionally include a dopant. The dopant may enhance the performance of the second positive electrode active material 11b and may include, for example, titanium (Ti), magnesium (Mg), vanadium (V), or a combination thereof.

The dopant may be distributed in various ways. For example, the dopant may be coated on the surface of a particle of the second positive electrode active material 11b, or incorporated into the lattice structure of a particle of second positive electrode active materials 11b.

In an example embodiment, the second positive electrode active material 11b may be represented by the following chemical formula 2.

chemical formula 2: Liₐ₂(Fe_{b2}Mn_{c2}X2_{d2})PO₄.

In the chemical formula 2, 0.8≤a2≤1.2, 0<b2≤1, 0≤c2<1, 0≤d2≤0.2, and b2+c2+d2=1.

X2 may include at least one of titanium (Ti), magnesium (Mg), vanadium (V), or a combination thereof.

In an example embodiment, c2 in the chemical formula 2 may be equal to zero.

The second positive electrode active material 11b according to examples of the present disclosure may include a plurality of particles. The shape of each of the plurality of particles may vary. For example, the shape of each of the particles may be spherical, oval, or the like.

The plurality of particles of the second positive electrode active material 11b may morphologically be single particles, or may morphologically be secondary particles resulting from agglomeration. That is, the particles may be provided as single particles and/or secondary particles, and the particle morphology may be designed according to the requirements of the battery.

In an example embodiment, the average particle diameter (D50_{11b}) of the second positive electrode active material 11b may be in a range of about 50 nm to about 10 µm, about 100 nm to about 7 µm, or about 500 nm to about 5 µm. The average particle diameter (D50_{11b}) may refer to a value corresponding to the point at which the cumulative volume reaches about 50% in a particle size distribution curve obtained using a particle size analyzer.

In an example embodiment, the average particle diameter (D50_{11b}) of the second positive electrode active material 11b may be smaller than the average particle diameter (D50₁₁ₐ) of the first positive electrode active material 11a.

In the positive active material 11 according to examples of the present disclosure, a weight ratio (weight proportion) of the first positive active material 11a to (in) the positive active material may be in a range of about 50 wt % to about 95 wt %. When the weight ratio (weight proportion) of the first positive electrode active material 11a is less than about 50 wt %, the energy density and output characteristics of the positive electrode active material may be reduced. When the weight ratio (weight proportion) of the first positive electrode active material 11a is greater than about 95 wt %, the stability of the positive electrode active material may be degraded.

The conductive material 12 according to the present disclosure is included to impart conductivity to the electrode, and may be applied without limitation as long as the conductive material 12 exhibits electronic conductivity and does not cause adverse or undesirable chemical changes in the battery.

In an example embodiment, the conductive material 12 may include at least one of a carbon-based material, a metal-based material, an electrically conductive polymer-based material, or a combination thereof. The carbon-based material may include, for example, at least one of natural graphite, artificial graphite, carbon black, acetylene black, Ketjen black, carbon fiber, carbon nanofiber, carbon nanotube, and the like. The metal-based material may be in the form of a powder or a fiber. The type of metal included in the metal-based material may include, for example, at least one of copper, nickel, aluminum, silver, or a combination thereof. The conductive polymer material may include, for example, a polyphenylene derivative.

The binder 13 according to the present disclosure binds the positive electrode active material 11 to the positive electrode current collector and enhances the adhesion between the particles of the positive electrode active material 11. Any material that improves adhesion and does not cause chemical changes in the battery may be used as the binder 13 without limitation.

In an example embodiment, the binder 13 may include at least one of polyvinyl alcohol, carboxymethyl cellulose, hydroxypropyl cellulose, diacetyl cellulose, polyvinyl chloride, carboxylated polyvinyl chlorides, polyvinyl fluoride, polymers containing ethylene oxide, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth) acrylic resin, polyester resin, nylon, or the like.

The additive for preventing gelation 14 according to the present disclosure may reduce or prevent gelation of the positive electrode slurry.

In general, a positive electrode active material containing nickel may suffer from increased lithium ion elution, which is attributed to structural instability arising from the layered crystal structure of the positive electrode active material. On the surface of the positive electrode active material, the eluted lithium ions may be mainly in the form of LiOH and Li₂CO₃. In the slurry state, such LiOH and Li₂CO₃ may increase the viscosity of the positive electrode slurry, and may thus constitute a major cause of gelation.

The occurrence of gelation in the slurry may result in substantial or rapid degradation of battery performance. For example, the gelation of the slurry may hinder the uniform coating of the slurry, which can lead to delamination between the electrode materials. In addition, when the conductive material 12 is not uniformly dispersed in the slurry, the conductivity of the battery may be reduced. Furthermore, gelation of the slurry may cause degradation of the binder 13, thereby triggering a cascading performance degradation.

The agglomeration of the conductive material 12 may be particularly severe in cases where carbon nanotubes (CNT) are employed as the conductive materials 12.

The degradation of the binder 13 may be particularly severe in cases where fluorine-based binder 13 is employed. A representative example of the fluorine-based binder is polyvinylidene fluoride (PVDF). Upon degradation, the fluorine-based binder may release fluoride ions (F⁻). The released fluoride ions (F⁻) may subsequently lead to significant degradation in battery performance, for example, by generating HF gas within the battery or by the solid electrolyte interface (SEI) layer.

The additive for preventing gelation 14 according to the present disclosure may be or include an acidic substance comprising a carboxy group. Therefore, the additive for preventing gelation 14 may lower the pH of the slurry, thereby effectively reducing or removing substances such as LiOH, Li₂CO₃, which may cause gelation.

In an example embodiment, the viscosity of the positive electrode slurry according to the present disclosure may be in a range of about 1000 cP to about 5000 cP at 25°C

In an example embodiment, the additive for preventing gelation 14 may include at least one of oxalic acid, succinic acid, malic acid, fumaric acid, or a combination thereof.

For example, the additive for preventing gelation 14 may include oxalic acid. Oxalic acid has a pKa of approximately 1.25, which is lower than the pKa of the other carboxylic acids listed herein. The low pKa value indicates that oxalic acid is more acidic, and therefore can be used effectively in smaller quantities compared to less acidic carboxylic acids. Due to the strong acidity thereof, oxalic acid may effectively reduce or prevent gelation even when used in a small amount. Thus, when oxalic acid is used, the desired effect may be achieved even with a minimal amount, which in turn maximize the energy density of the resulting battery.

In the positive electrode slurry according to the present disclosure, the weight ratio of the additive for preventing gelation 14 to the weight of the first positive electrode active material 11a may be in a range of about 0.1 wt % to about 0.2 wt %. Alternatively, the weight ratio of the additive for preventing gelation 14 to the weight of the first positive electrode active material 11a may be in a range of about 0.1 wt % to about 0.15 wt %.

The additive for preventing gelation 14 according to the present disclosure may be present in the form of a salt in the positive electrode slurry or positive electrode. For example, when oxalic acid (H₂C₂O₄) is added, a portion thereof may be converted into oxalate (C₂O₄²⁻) in the positive electrode slurry.

The positive electrode according to examples of the present disclosure may include a positive electrode current collector, and a positive electrode active material layer on the positive electrode current collector.

The positive electrode active material layer may be formed by coating the positive electrode slurry described above on the positive electrode current collector, followed by performing a solvent evaporation step. Therefore, the positive electrode active material layer may include the positive electrode active material 11, the conductive material 12, the binder 13, and the additive for preventing gelation 14. These electrode materials may be the same as the materials included in the positive electrode slurry described above.

Based on the total weight of the positive electrode active material layer, the amount of the positive active material 11 may be in a range of about 90 wt % to about 99 wt %.

Based on the total weight of the positive electrode active material layer, the amount of the conductive material 12 may be in a range of about 0.1 wt % to about 5 wt %.

Based on the total weight of the positive electrode active material layer, the amount of the binder 13 may be in a range of about 0.1 wt % to about 5 wt %.

In the positive electrode according to examples of the present disclosure, the presence or absence of the additive for preventing gelation 14 may be confirmed through qualitative analysis, and the amount of the additive for prevention of gelation 14 may be determined through quantitative analysis.

As a qualitative detection method, X-ray electron spectroscopy (XPS), Fourier transform infrared spectroscopy (FT-IR), Raman spectroscopy, or the like may be used. For example, in the case of FT-IR, the presence or absence of the additive 14 for preventing gelation may be confirmed through a "C=O" peak around 1700 cm⁻¹, a "C-O" peak around 1300 cm⁻¹ and a peak corresponding to the "-OH" stretching vibration in the range of 2500 cm⁻¹ to 3300 cm⁻¹ .

As a quantitative detection method, ion chromatography (IC), high performance liquid chromatography (HPLC), or the like may be used. For example, in the case of HLPC, an extraction solvent may be added to the positive electrode to elute the additive 14. The resulting solution may then be injected into an HPLC column and analyzed, and the presence of the additive 14 may be confirmed by comparing the resulting chromatogram with the chromatogram of a standard solution (e.g., oxalic acid standard solution). In addition, the amount of the additive 14 may be determined by comparing the peak area of the sample with the calibration curve obtained from the standard solution.

### Method for Manufacturing Positive Electrode for Rechargeable lithium battery

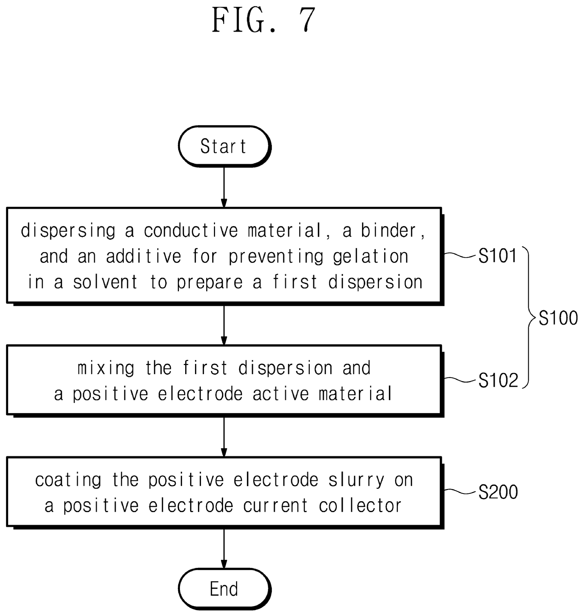

FIG. 7 is a flowchart of a method for manufacturing a positive electrode for a rechargeable lithium battery, according to an example embodiment of the present disclosure. Detailed descriptions of technical features overlapping the technical features described above are omitted, and differences are described in detail.

Referring to FIG. 7, a method for manufacturing a positive electrode for a rechargeable lithium battery according to examples of the present disclosure may include preparing a positive electrode slurry including a positive electrode active material, a conductive material, a binder, and an additive for preventing gelation (S100); and coating the positive electrode slurry on a positive electrode current collector (S200).

In an example embodiment, the additive for preventing gelation may be dispersed prior to the introduction of the positive electrode active material. This may allow the additive for preventing gelation to be more uniformly dispersed. For example, preparing the positive electrode slurry (S100) may include dispersing the conductive material, the binder, and the additive for preventing gelation in a solvent to prepare a first dispersion (S101), and mixing the first dispersion and the positive electrode active material (S102).

The solvent used in preparing the positive electrode slurry (S100) may be applied without limitation, as long as the solvent is capable of uniformly dispersing the positive electrode active material, the conductive material, the binder, and the additive for preventing gelation. As the solvent, for example, at least one of dimethyl sulfoxide (DMSO), dimethylformamide (DMF), N-methyl-2-pyrrolidone (NMP), ethanol, propanol, isopropyl alcohol (IPA), dimethyl carbonate (DMC), dichloromethane (DCM), water, or the like may be used.

The coating method used for coating the positive electrode slurry on the positive electrode current collector (S200) may be applied without limitation, as long as the method is generally used for slurry coating in the art. As the coating method, for example, spray coating, doctor blade coating, roll-to-roll coating, slot die coating, wire bar coating, dip coating, aerosol coating, or the like, may be used.

Examples and Comparative Examples of the present disclosure are described below. However, the following examples are provided for illustrative purpose only are not intended to limit the scope of the present disclosure.

### Example 1

### (1) Preparation of First Positive Electrode Active Material

A co-precipitation method was used to prepare a nickel-based precursor. Specifically, a metal raw material mixture was prepared by stirring nickel sulfate (NiSO₄·6H₂O), cobalt sulfate (CoSO₄·7H₂O), and aluminum sulfate (Al₂(SO₄)₃·18H₂O) in distilled water as a solvent at a molar ratio of Ni:Co:Al = about 88.5:10:1.5 for 30 hours. The metal raw material mixture, ammonia water, and sodium hydroxide were charged into a reactor and reacted. The slurry solution in the reactor was filtered and washed with high purity distilled water. A nickel-based precursor (Ni_{0.885}Co_{0.10}Al_{0.015}(OH)₂) powder was prepared by drying the washed material in a hot-air oven at about 210°C for about 24 hours.

The nickel-based precursor and anhydrous lithium hydroxide (LiOH) were dry-mixed using a Henschel mixer. Lithium and transition metals were mixed in a molar ratio of about 1:1. The transition metals correspond to the total amount of the transition metals contained in the nickel-based precursor (Ni+Co+Al). The mixture was further charged with a melting agent and subjected to a heat treatment (i.e., a calcination process) at about 750°C for about 15 hours under an oxygen atmosphere. Then, a nickel-based first positive electrode active material (Li₁Ni_{0.885}Co_{0.10}Al_{0.015}O₂) was produced by pulverizing the mixture using a jet mill at a pressure of about 3 bar.

### (2) Preparation of Second Positive Electrode Active Material

An iron phosphate precursor of FePO₄, lithium carbonate, and titanium dioxide were mixed at a molar ratio of Fe:Li:Ti = about 1:1.03:0.03. The mixture was subjected to a wet grinding process by ball milling. The mixture was evaporated to dryness in a tray placed in a heating furnace, and then dried in a vacuum oven at about 120°C for about 4 hours. The dried mixture was calcined at about 750°C for about 10 hours under nitrogen atmosphere. A second positive electrode active material (Ti doped LiFePO₄) was prepared by pulverizing the calcinated product.

### (3) Preparation of Positive Electrode Slurry

A preliminary slurry was prepared by dispersing a conductive material (CNT), a binder (PVDF), and an additive for preventing gelation (oxalic acid) in an N-methyl pyrrolidone solvent.

A positive active material was prepared by mixing the first positive active material of (1) and the second positive active material of (2) at a weight ratio of about 70:30. A positive electrode slurry was prepared by mixing the positive electrode active material and the preliminary slurry.

In the positive electrode slurry, the weight ratio of "the positive electrode active material: the conductive material: the binder" was about 97:1:2. In the positive electrode slurry, the weight ratio of the additive for preventing gelation to the weight of the first positive electrode active material was about 0.1 wt %.

### (4) Preparation of positive electrode

A positive electrode was prepared by coating the positive electrode slurry on an aluminum (Al) thin film having a thickness of about 15 µm, drying, and then roll-pressing.

### (5) Preparation of Battery

A 2032 type coin half-cell including a lithium metal counter electrode, a positive electrode of (4), and a separator (polyethylene, thickness about 16 µm) interposed between the counter electrode and the positive electrode was prepared.

As an electrolytic solution, a solution in which about 1.3 M LiPF₆ was blended into a mixed solvent containing ethylene carbonate (EC), ethyl methyl carbonate (EMC), and dimethylene carbonate (DMC) at a volume ratio of about 3:4:3 was injected.

### Example 2 to Example 4

In the above (3), "the weight ratio of the additive for preventing gelation to the weight of the first positive electrode active material" was adjusted in various ways. Details of each example are shown in Table 1 below.

The above (1) to (5) were performed in the same manner as in Example 1 except for adjusting the weight ratio of the additive for preventing gelation to the weight of the first positive electrode active material.

### Comparative Example 1

In the above (3), the additive for preventing gelation was not added.

The above (1) to (5) were performed in the same manner as in Example 1 except for the fact that the additive for preventing gelation was not added.

### Comparative Examples 2 to 7

In the above (3), "the weight ratio between the first positive electrode active material and the second positive electrode active material" was adjusted in various ways, and the additive for preventing gelation was not added. The details of each comparative example are shown in Table 1 below.

The above (1) to (5) were performed in the same manner as in Example 1 except for adjusting the weight ratio between the first positive electrode active material and the second positive electrode active material.

"The weight ratio of NCA:LFP" and "The amount of oxalic acid" in the Examples and Comparative Examples are shown in Table 1 below. The amount of oxalic acid refers to "Oxalic acid weight/NCA weight".

**Table 1**

| | Weight ratio of NCA: LFP | Amount of oxalic Acid (wt %) |
|---|---|---|
| Example 1 | 70:30 | 0.1 |
| Example 2 | 70:30 | 0.15 |
| Example 3 | 70:30 | 0.05 |
| Example 4 | 70:30 | 0.3 |
| Comparative Example 1 | 70:30 | 0 |
| Comparative Example 2 | 0:100 | 0 |
| Comparative Example 3 | 15:85 | 0 |
| Comparative Example 4 | 30:70 | 0 |
| Comparative Example 5 | 50:50 | 0 |
| Comparative Example 6 | 80:20 | 0 |
| Comparative Example 7 | 100:0 | 0 |

### Evaluation Example1: Evaluation of Viscosity (1)

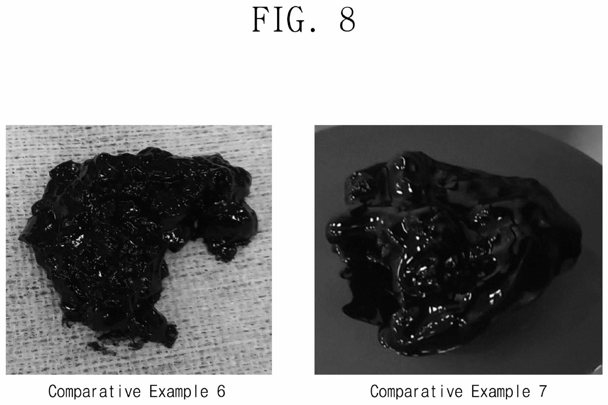

The positive electrode slurries of some comparative examples were subjected to viscosity evaluation. All viscosity measurements were performed at room temperature, after the slurry had been stirred and allowed to rest. MCR302e, a viscosity measuring instrument manufactured by Anton Paar GmbH, was used. The results are shown in Table 2 below and FIG. 8.

**Table 2**

| | Viscosity (cP) | | | | | | Viscosity Increase Rate (%) |
|---|---|---|---|---|---|---|---|
| | Immediately after Stirring | After 1 Day | After 2 Days | After 3 Days | After 4 Days | After 7 Days | |
| Comparative Example 2 | 5819.5 | 7424.1 | 7236.1 | 8447 | 8765.3 | 7617.8 | 31 |
| Comparative Example 3 | 6306.7 | 6726.2 | 7388.3 | 8425.9 | 8950.7 | 8043.4 | 28 |
| Comparative Example 4 | 4753.2 | 5725.7 | 6180.5 | 6936.8 | 7523.9 | 6901 | 45 |
| Comparative Example 5 | 4454 | 5453.6 | 6584.3 | 8163.7 | 9066.96 | 10539 | 137 |
| Comparative Example 6 | 2191.7 | 8938.9 | 10020 | 23012 | 32901 | Gelling | Not measurable |
| Comparative Example 7 | 2142.2 | 2976.6 | 7468.8 | 15655 | 16847 | Gelling | Not measurable |

### Evaluation Example 2: Evaluation of Fluoride Ion (F⁻) amount

Fluoride ion (F⁻) amount was measured for the positive electrode slurries of some comparative examples. A combustion ion chromatography method was employed in which the positive electrode slurry was combusted to produce a gas, and the resulting gas component was analyzed by ion chromatography. The measurement conditions were as follows.

Combustion analysis: AQF-100, Mitsubishi/inlet 1000°C, outlet 1100°C, absorption time 12 min

Ion chromatography: ICS-2000, Dionex/ASRS18 column, KOH eluent, flowrate 1.0 mL/min

The results are shown in Table 3 below.

**Table 3**

| | F⁻ (ppm, mg/kg) | | | |
|---|---|---|---|---|
| | After 1 Day | After 3 Days | After 5 Days | After 7 Days |
| Comparative Example 2 | ND | ND | ND | ND |
| Comparative Example 3 | ND | ND | ND | ND |
| Comparative Example 4 | 1 | 1 | 1 | 2 |
| Comparative Example 5 | 3 | 35 | 44 | 57 |
| Comparative Example 6 | 59 | 103 | 127 | 171 |
| Comparative Example 7 | 139 | 205 | 224 | 283 |

| | | | | |
|---|---|---|---|---|
| *ND: Not Detected | | | | |

An increase in the amount of detected fluoride ions indicates further degradation of the binder, which may constitute an indicator of an increased gelation of the positive electrode slurry. Referring to Tables 2 and 3, it may be confirmed that the gelation becomes more pronounced as the weight of the first positive electrode active material (NCA) increases relative to the second positive electrode active material (LFP). In particular, it may be confirmed that when the weight ratio (weight proportion) of the first positive electrode active material (NCA) is 50 or greater, the gelation issue of the positive electrode slurry becomes significantly more severe.

That is, it may be confirmed that, when the weight ratio (weight proportion) of the first positive electrode active material (NCA) is increased to 50 or greater in order to enhance the energy density of the positive electrode active material, it may be advantageous to resolve the slurry gelation issue.

### Evaluation Example 3: Evaluation of Viscosity (2)

The positive electrode slurries of some Examples and some Comparative Examples were subjected to viscosity evaluation. All viscosity measurements were performed at room temperature, after the slurry had been stirred and allowed to rest. MCR302e, a viscosity measuring instrument manufactured by Anton Paar GmbH, was used. The results are shown in Table 4 below.

**Table 4**

| | Viscosity (cP) | | | | | Viscosity Increase Rate (%) |
|---|---|---|---|---|---|---|
| | Immediately after Stirring | After 1 Day | After 3 Days | After 4 Days | After 7 Days | |
| Example 1 | 2689.5 | 3139.1 | 3206.1 | 3108.9 | 3167.9 | 18 |
| Example 2 | 3092.2 | 3464.6 | 3478.7 | 3680.5 | 3711.3 | 20 |
| Example 3 | 2314.1 | 2974.6 | 3441.7 | 3583.3 | 4187.1 | 81 |
| Example 4 | 3274.2 | 3747.4 | 3693.3 | 3897.4 | 4276.5 | 31 |
| Comparative Example 1 | 2100.3 | 2689.1 | 3788.5 | 3547.9 | 5265.9 | 151 |

Referring to Table 4, it may be confirmed that the viscosity increase rates of Examples 1 to 4 are lower than the viscosity increase rates of Comparative Example 1. That is, it can be confirmed that the inclusion of the additive for preventing gelation according to the present disclosure reduces the gelation of the positive electrode slurry. In addition, it can be confirmed that the viscosity increase rates of Examples 1 to 2 are significantly lower than the viscosity increase rates of the other Examples. It confirms that the additive for preventing gelation according to the present disclosure exhibits improved or superior effectiveness when used in an appropriate amount range.

A positive electrode according to an example embodiment of the present disclosure may have high energy density and stability, and gelation may not occur in a slurry state. Therefore, the battery including the positive electrode may exhibit desired or improved performance.

While the present disclosure has been described with reference to example embodiments, it should be understood that these example embodiments are provided for illustrative purposes only, and do not limit the scope of the present disclosure. Various modifications and equivalent arrangements may be made without departing from the spirit and scope of the appended claims. Accordingly, the described embodiments should be regarded as examples rather than limitations of the present disclosure.

## Claims

1. A positive electrode slurry comprising:
a positive electrode active material, a conductive material, a binder, and an additive for preventing gelation,
wherein the positive electrode active material comprises a nickel-based first positive electrode active material having a layered structure and a phosphate-based second positive electrode active material,
wherein a weight ratio of the first positive electrode active material to the positive electrode active material is in a range of 50 wt % to 95 wt %, and
wherein the additive for preventing gelation comprises at least one of oxalic acid, succinic acid, malic acid, fumaric acid, and a combination thereof.

2. The positive electrode slurry as claimed in claim 1, wherein a weight ratio of the additive for preventing gelation to the first positive electrode active material is in a range of 0.1 wt % to 0.2 wt %.

3. The positive electrode slurry as claimed in claim 1 or 2,
wherein the first positive electrode active material is represented by chemical formula 1,
wherein the second positive electrode active material is represented by chemical formula 2,
chemical formula 1: Liₐ₁(Ni_{b1}Co_{c1}X1_{d1}Y1ₑ₁)O₂;
wherein 0.8≤a1≤1.2, 0.6≤b1<1.0, 0<c1≤0.2, 0≤d1≤0.2, 0≤e1<0.1, and b1+c1+d1+e1=1,
X1 comprises at least one of aluminum (Al), manganese (Mn), and a combination thereof,
Y1 comprises at least one of zirconium (Zr), aluminum (Al), vanadium (V), chromium (Cr), iron (Fe), rhenium (Re), boron (B), ruthenium (Ru), titanium (Ti), niobium (Nb), molybdenum (Mo), magnesium (Mg), platinum (Pt), and a combination thereof,
chemical formula 2: Liₐ₂(Fe_{b2}Mn_{c2}X2_{d2})PO₄;
wherein 0.8≤a2≤1.2, 0<b2≤1, 0≤c2<1, 0≤d2≤0.2, and b2+c2+d2=1, and
X2 comprises at least one of titanium (Ti), magnesium (Mg), vanadium (V), and a combination thereof.

4. The positive electrode slurry as claimed in claim 3, wherein X1 comprises aluminum (Al).

5. The positive electrode slurry as claimed in claim 3 or 4, wherein b1 is equal to or greater than 0.8 and less than 1.0.

6. The positive electrode slurry as claimed in any of claims 3-5, wherein c2 is equal to 0.

7. The positive electrode slurry as claimed in any of the preceding claims, wherein a viscosity of the positive electrode slurry is in a range of 1000 cP to 5000 cP at a temperature of 25°C.

8. A positive electrode for a rechargeable lithium battery, the positive electrode comprising:
a positive electrode current collector; and
a positive electrode active material layer on the positive electrode current collector,
wherein the positive electrode active material layer comprises a positive electrode active material, a conductive material, a binder, and an additive for preventing gelation,
wherein the positive electrode active material comprises a nickel-based first positive electrode active material having a layered structure and a phosphate-based second positive electrode active material,
wherein a weight ratio of the first positive electrode active material to the positive electrode active material is in a range of 50 wt % to 95 wt %, and
wherein the additive for preventing gelation comprises at least one of oxalic acid, succinic acid, malic acid, fumaric acid, and a combination thereof.

9. The positive electrode as claimed in claim 8, wherein a weight ratio of the additive for preventing gelation to the first positive electrode active material is in a range of 0.1 wt % to 0.2 wt %.

10. The positive electrode as claimed in claim 8 or 9,
wherein the first positive electrode active material is represented by chemical formula 1,
wherein the second positive electrode active material is represented by chemical formula 2,
chemical formula 1: Liₐ₁(Ni_{b1}Co_{c1}X1_{d1}Y1ₑ₁)O₂,
wherein 0.8≤a1≤1.2, 0.6≤b1<1.0, 0<c1≤0.2, 0≤d1≤0.2, 0≤e1<0.1, and b1+c1+d1+e1=1,
X1 comprises at least one of aluminum (Al), manganese (Mn), and a combination thereof,
Y1 comprises at least one of zirconium (Zr), aluminum (Al), vanadium (V), chromium (Cr), iron (Fe), rhenium (Re), boron (B), ruthenium (Ru), titanium (Ti), niobium (Nb), molybdenum (Mo), magnesium (Mg), platinum (Pt), and a combination thereof,
chemical formula 2: Liₐ₂(Fe_{b2}Mn_{c2}X2_{d2})PO₄;
wherein 0.8≤a2≤1.2, 0<b2≤1, 0≤c2<1, 0≤d2≤0.2, and b2+c2+d2=1, and
X2 comprises at least one of titanium (Ti), magnesium (Mg), vanadium (V), and a combination thereof.

11. The positive electrode as claimed in claim 10, wherein X1 comprises aluminum (Al).

12. The positive electrode as claimed in claim 10 or 11, wherein b1 is equal to or greater than 0.8 and less than 1.0.

13. The positive electrode as claimed in any of claims 10-12, wherein c2 is equal to 0.

14. A method for manufacturing a positive electrode for a rechargeable lithium battery, the method comprising:
preparing a positive electrode slurry including a positive electrode active material, a conductive material, a binder, and an additive for preventing gelation; and
coating the positive electrode slurry on a positive electrode current collector,
wherein the positive electrode active material comprises a nickel-based first positive electrode active material having a layered structure and a phosphate-based second positive electrode active material,
wherein a weight ratio of the first positive electrode active material to the positive electrode active material is in a range of 50 wt % to 95 wt %, and
wherein the additive for preventing gelation comprises at least one of oxalic acid, succinic acid, malic acid, fumaric acid, and a combination thereof.

15. The method as claimed in claim 14, wherein a weight ratio of the additive for preventing gelation to the first positive electrode active material is in a range of 0.1 wt % to 0.2 wt %.
